# EUROPÄISCHE PATENTSCHRIFT

(11) **EP 3 898 793 B1**
(45) Veröffentlichungstag und Bekanntmachung des Hinweises auf die Patenterteilung: **10.07.2024**
(21) Anmeldenummer: 19818043.2
(22) Anmeldetag: 10.12.2019
(51) Int. Cl.: C08K 3/04, C09D 5/24, C08J 7/044, C08J 7/04, C08J 3/24, C08J 7/06, B29C 71/02

(54) **LEITFÄHIGER ELASTOMERWERKSTOFF MIT ELEKTRISCHEN KONTAKTIERUNGSPUNKTEN**
CONDUCTIVE ELASTOMER MATERIAL HAVING ELECTRICAL CONTACTING POINTS
MATÉRIAU ÉLASTOMÈRE CONDUCTEUR MUNI DE POINTS DE CONTACT ÉLECTRIQUE

(30) Priorität: 20.12.2018 DE 102018222390
(43) Veröffentlichungstag der Anmeldung: 27.10.2021
(73) Patentinhaber: ContiTech Deutschland GmbH, 30175 Hannover (DE)
(72) Erfinder: SOSTMANN, Stefan, 30419 Hannover (DE); WIETZKE, Steffen, 30419 Hannover (DE); SCHIRRMACHER, Sebastian, 30419 Hannover (DE)
(74) Vertreter: Continental Corporation
(86) Internationale Anmeldenummer: PCT/EP2019/084299
(87) Internationale Veröffentlichungsnummer: WO 2020/126628

(56) Entgegenhaltungen:
- EP-A1- 2 211 236
- DE-C1- 10 108 165
- JP-A- 2008 170 878
- US-A1- 2011 094 777

## Beschreibung

Die vorliegende Erfindung betrifft ein Verfahren zur Herstellung eines mit zumindest einem Leitfähigkeitsadditiv gefüllten Elastomerwerkstoffes mit elektrischen Kontaktierungspunkten, umfassend (a) das Bereitstellen eines mit zumindest einem Leitfähigkeitsadditiv gefüllten Elastomerwerkstoffes, (b) das Auswählen von für eine Kontaktierung vorgesehenen Kontaktierungspunkten auf der Oberfläche des mit zumindest einem Leitfähigkeitsadditiv gefüllten Elastomerwerkstoffes, (c) das Behandeln der für eine Kontaktierung vorgesehenen Kontaktierungspunkte auf der Oberfläche des mit zumindest einem Leitfähigkeitsadditiv gefüllten Elastomerwerkstoffes mit einer Dispersion, welche zumindest ein Leitfähigkeitsadditiv auf Kohlenstoffbasis in einer Menge von mindestens 20 Gew.-%, bezogen auf den Feststoffgehalt der gesamten Dispersion, umfasst, (d) das Trocknen oder das Trocknenlassen des mit einer Dispersion behandelten Elastomerwerkstoffes, und (e) das Vulkanisieren des mit einer Dispersion behandelten Elastomerwerkstoffes, wenn der in Schritt (a) eingesetzte Elastomerwerkstoff ein unvulkanisierter Elastomerwerkstoff ist. Die vorliegende Erfindung betrifft ferner einen mit zumindest einem Leitfähigkeitsadditiv gefüllten Elastomerwerkstoff mit elektrischen Kontaktierungspunkten, ein Verfahren zur Verbesserung der elektrischen Kontaktierung eines mit zumindest einem Leitfähigkeitsadditiv gefüllten Elastomerwerkstoffes, sowie die Verwendung einer Dispersion zur Verbesserung der elektrischen Leitfähigkeit eines mit zumindest einem Leitfähigkeitsadditiv gefüllten Elastomerwerkstoffes.

Elastomerwerkstoffe können durch Compoundierung mit geeigneten leitfähigen Additiven wie beispielsweise Ruß, Kohlenstoffnanoröhren oder anderen leitfähigen Partikelnmit beachtlichen Leitfähigkeiten versehen werden, siehe bspw. EP 2 211 236 A1, US 2011/09477 A1, DE 10 108 165 C1 oder JP 2008 170878 A. Entsprechende Elastomerwerkstoffe sind beispielsweise in U. Leute, Elektrisch Leitfähige Polymerwerkstoffe, 2015, Springer-Vieweg-Verlag, Kapitel 2, beschrieben. Derartige leitfähige Elastomerwerkstoffe finden zum Beispiel Anwendung bei der Herstellung elektrisch ableitfähiger Betankungsschläuche, ableitfähiger Reifen oder antistatischer Riemen. Darüber hinaus finden leitfähige Elastomerwerkstoffe auch Anwendung in elektronischen Bauteilen. Um die Leitfähigkeit eines Elastomerwerkstoffes in derartigen Anwendungen nutzen zu können, ist es wesentlich, den Elastomerwerkstoff in geeigneter Weise zu kontaktieren. Dies erfolgt in der Regel, indem ein metallisches Kontaktelement wie beispielsweise eine Klemme oder Elektrode in eine flächige Verbindung mit dem Elastomerwerkstoff gebracht wird. Diese Kontaktierung kann weiter durch ein definiertes Andruckmoment unterstützt werden. Es ist aber ebenfalls möglich, eine Kontaktierung über metallische Festigkeitsträger wie beispielsweise Stahlcorde oder Drähte zu bewerkstelligen.

Während die Leitfähigkeit innerhalb der Elastomerwerkstoffe gut über die Menge, den Typ und den Dispersionsgrad des leitfähigen Additivs steuerbar ist, kommt es an den Grenzflächen regelmäßig zu Kontaktierungsproblemen. Es treten unterschiedlich starke Kontaktierungswiderstände auf, die teilweise um ein Vielfaches größer als die intrinsischen Materialwiderstände sind. Es hat sich gezeigt, dass die Kontaktierungswiderstände umso dominanter werden, je leitfähiger das Material wird. Da aber grundsätzlich leitfähigere Elastomerwerkstoffe angestrebt werden, sind die Entwicklungsmöglichkeiten aufgrund dieser Kontaktierungswiderstände stark eingeschränkt.

Zur Verbesserung der Kontaktierung wurde vorgeschlagen, die Oberfläche des Elastomerwerkstoffes zunächst mit einer Leitlackelektrode zu versehen. Technisch hat sich dabei insbesondere die Behandlung der Oberfläche mit einem sogenannten Silberleitlack etabliert, welche vor der eigentlichen Kontaktierung erfolgt. In dem Silberleitlack befinden sich fein dispergierte Silberpartikel in einem Lösungsmittelgemisch. Der Silberleitlack kann den Kontaktierungswiderstand deutlich verringern. Dies ist beispielsweise in R. Brown, Physical Testing of Rubber, 2006, Springer-Verlag, Seite 263, beschrieben.

Die Verwendung eines Silberleitlackes zur Verbesserung der Kontaktierung ist allerdings mit einer Reihe an Nachteilen verbunden. So ist der Silberleitlack auf der Oberfläche des Elastomerwerkstoffes aufgrund seiner Farbe deutlich zu erkennen und daher für zahlreiche Anwendungen nicht geeignet. Darüber hinaus ist der Silberleitlack sehr alterungsempfindlich, speziell in Verbindung mit schwefelvernetzten Elastomeren. Der Silberleitlack ist auch spröde und bricht bei Belastungen sofort auf. Weiterhin kann der Silberleitlack nur nach der Vulkanisation eingesetzt werden und ist somit nicht für alle Anwendungen (beispielsweise Elektrodendrähte, die in Gummi eingebettet sind) einsetzbar.

Der vorliegenden Erfindung liegt daher die Aufgabe zugrunde, eine verbesserte Kontaktierung für leitfähige Elastomerwerkstoffe bereitzustellen, welche die vorstehend genannten Nachteile nicht aufweist.

Diese Aufgabe wird durch die in den Ansprüchen gekennzeichneten Ausführungsformen gelöst.

Insbesondere wird erfindungsgemäß ein Verfahren zur Herstellung eines mit zumindest einem Leitfähigkeitsadditiv gefüllten Elastomerwerkstoffes mit elektrischen Kontaktierungspunkten bereitgestellt, umfassend (a) das Bereitstellen eines mit zumindest einem Leitfähigkeitsadditiv gefüllten Elastomerwerkstoffes, (b) das Auswählen von für eine Kontaktierung vorgesehenen Kontaktierungspunkten auf der Oberfläche des mit zumindest einem Leitfähigkeitsadditiv gefüllten Elastomerwerkstoffes, (c) das Behandeln der für eine Kontaktierung vorgesehenen Kontaktierungspunkte auf der Oberfläche des mit zumindest einem Leitfähigkeitsadditiv gefüllten Elastomerwerkstoffes mit einer Dispersion, welche zumindest ein Leitfähigkeitsadditiv auf Kohlenstoffbasis in einer Menge von mindestens 30 bis 100 Gew.-%, bezogen auf den Feststoffgehalt der gesamten Dispersion, umfasst, (d) das Trocknen oder das Trocknenlassen des mit einer Dispersion behandelten Elastomerwerkstoffes, und (e) das Vulkanisieren des mit einer Dispersion behandelten Elastomerwerkstoffes, wenn der in Schritt (a) eingesetzte Elastomerwerkstoff ein unvulkanisierter Elastomerwerkstoff ist.

Schritt (a) des erfindungsgemäßen Verfahrens stellt das Bereitstellen eines mit zumindest einem Leitfähigkeitsadditiv gefüllten Elastomerwerkstoffes dar. Der in diesem Schritt eingesetzte Elastomerwerkstoff kann jedweder geeignete Elastomerwerkstoff sein. Geeignete Elastomerwerkstoffe sind beispielsweise in F. Röthemeyer, Kautschuktechnologie, 3. Auflage, 2013, Hanser-Verlag, beschrieben. Gemäß einer bevorzugten Ausführungsform des erfindungsgemäßen Verfahrens ist der Elastomerwerkstoff aus der Gruppe, bestehend aus Acrylnitril-Butadien-Kautschuk (NBR), Carboxylgruppen-haltigem Nitril-Kautschuk (XNBR), Ethylen-Vinylacetat-Copolymer (EVAC), Ethylen-Vinylacetat-Kautschuk (EVM), hydriertem Acrylnitril-Butadien-Kautschuk (HNBR), Ethylen-Acrylat-Kautschuk (AEM), Polyacrylat-Kautschuk (ACM), Chlorpolyethylen-Kautschuk (CM), Chlorsulphonyl-Polyethylen-Kautschuk (CSM), Ethylen-Propylen-Dien-Kautschuk (EPDM), Ethylen-Propylen-Kautschuk (EPM), Epichlorhydrin-Kautschuk (CO), Epichlorhydrin-Copolymer-Kautschuk (ECO), Epichlorhydrin-Terpolymer (GECO), Polydimethylsiloxan (PDMS), Propylenoxid-Copolymer-Kautschuk (GPO), Butadien-Kautschuk (BR), Chloropren-Kautschuk (CR), Isobuten-Isopren-Kautschuk (IIR), Brombutyl-Kautschuk (BIIR), Chlorbutyl-Kautschuk (CIIR), Isopren-Kautschuk (IR), Natur-Kautschuk (NR), Styrol-Butadien-Kautschuk (SBR), Methyl-Phenyl-Silicon-Kautschuk (PMQ), Methyl-Phenyl-Vinyl-Silicon-Kautschuk (PVMQ), Methyl-Silicon-Kautschuk (MQ), Methyl-Vinyl-Silicon-Kautschuk (VMQ), Polyester-Urethanen (AU), Polyether-Urethanen (EU) und Kombinationen davon, ausgewählt.

Der Elastomerwerkstoff, der mit zumindest einem Leitfähigkeitsadditiv gefüllt ist, kann vulkanisiert oder unvulkanisiert eingesetzt werden. Wenn es sich bei diesem um einen vulkanisierten Elastomerwerkstoff handelt, muss dieser im weiteren Verlauf des Verfahrens nicht mehr vulkanisiert werden, d.h. der Schritt (e) des erfindungsgemäßen Verfahrens ist nicht notwendig. Handelt es sich hingegen um einen unvulkanisierten Elastomerwerkstoff, so ist dieser gemäß Schritt (e) des erfindungsgemäßen Verfahrens noch zu vulkanisieren. Das Vulkanisieren des unvulkanisierten Elastomerwerkstoffs gemäß Schritt (e) kann durch jedwedes übliche Vulkanisationsverfahren erfolgen. Vorzugsweise erfolgt das Vulkanisieren bei einer Temperatur im Bereich von 100 bis 250°C, besonders bevorzugt bei einer Temperatur im Bereich von 130 bis 180°C. Das Vulkanisieren kann beispielsweise bei einem Druck von 10 bis 200 bar durchgeführt werden, gegebenenfalls in einem Autoklaven. Gemäß einer bevorzugten Ausführungsform des erfindungsgemäßen Verfahrens ist der mit zumindest einem Leitfähigkeitsadditiv gefüllte Elastomerwerkstoff in Schritt (a) ein vulkanisierter Elastomerwerkstoff und es wird kein zusätzlicher Schritt (e) des Vulkanisierens durchgeführt.

Der in Schritt (a) des erfindungsgemäßen Verfahrens bereitgestellte Elastomerwerkstoff ist mit einem Leitfähigkeitsadditiv gefüllt. Als Leitfähigkeitsadditiv kann jedwedes geeignete, im Stand der Technik bekannte Leitfähigkeitsadditiv verwendet werden. Das Leitfähigkeitsadditiv kann beispielsweise aus der Gruppe, bestehend aus Rußen, Graphiten, Graphenen, Kohlenstoffnanoröhren, Kohlenstofffasern, metallorganischen Gerüsten ("*metall-organic frameworks; MOFs"*)*,* Silica, Zeolithen, Metallnanopartikeln, Metallsalznanopartikeln und Kombinationen davon, ausgewählt sein. Bei den Metallnanopartikeln handelt es sich beispielsweise um Nanofasern, Nanodrähte, Nanosphären und/oder Nanoröhren aus zumindest einem Metall, ausgewählt aus Fe, Zn, Cu, Ag, Au, Sn, Sb, Bi und Kombinationen davon. Bei den Metallsalznanopartikeln handelt es sich beispielsweise um Nanofasern, Nanodrähte, Nanosphären und/oder Nanoröhren aus zumindest einem Metallsalz, ausgewählt aus einem Lithiumsalz, einem Zinksalz, einem Vanadiumsalz, einem Titansalz und Kombinationen davon. Bevorzugte Metallsalze sind LiMPO₄, LiMO₂, Li₂MPO₄F, Li₄Ti₅O₁₂, LiMn₂O₄, ZnCo₂O₄, V₂O₅, Na₂Ti₃O₇, wobei M Fe, Ni, Mn oder Co ist. Vorzugsweise ist der Elastomerwerkstoff mit einem Leitfähigkeitsadditiv auf Kohlenstoffbasis wie beispielsweise Ruß, Graphit, Graphen, Kohlenstoffnanoröhren, Kohlenstofffasern oder Kombinationen davon gefüllt. Ganz besonders bevorzugt ist der in Schritt (a) des erfindungsgemäßen Verfahrens bereitgestellte Elastomerwerkstoff mit Ruß als Leitfähigkeitsadditiv gefüllt. Geeignete Ruße sind dem Fachmann bekannt und umfassen beispielsweise solche, die in der Elastomerindustrie als verstärkende Füllstoffe eingesetzt werden. Das Leitfähigkeitsadditiv kann in jedweder geeigneten Menge in dem Elastomerwerkstoff enthalten sein. Vorzugsweise ist das Leitfähigkeitsadditiv in einer Menge von 5 bis 250 phr in dem Elastomerwerkstoff enthalten, besonders bevorzugt in einer Menge von 20 bis 200 phr und ganz besonders bevorzugt in einer Menge von 50 bis 160 phr.

Schritt (b) des erfindungsgemäßen stellt das Auswählen von für eine Kontaktierung vorgesehenen Kontaktierungspunkten auf der Oberfläche des mit zumindest einem Leitfähigkeitsadditiv gefüllten Elastomerwerkstoffes dar. Der durch das erfindungsgemäße Verfahren erhältliche behandelte Elastomerwerkstoff ist insbesondere zur elektrischen Kontaktierung vorgesehen. Die erfolgt beispielsweise, indem ein metallisches Kontaktelement wie eine Klemme, eine Elektrode oder ein Festigkeitsträger in Verbindung mit dem Elastomerwerkstoff gebracht wird. Diese Kontaktierung kann weiter durch ein definiertes Andruckmoment unterstützt werden. Je nach vorgesehener Anwendung sind daher die Punkte auf der Oberfläche des Elastomerwerkstoffes auszuwählen, die für eine Kontaktierung vorgesehen sind. Diese Punkte kann der Fachmann in geeigneter Weise auswählen. Vorzugsweise umfasst dieser Schritt des erfindungsgemäßen Verfahrens das Auswählen von zumindest zwei Kontaktierungspunkten auf der Oberfläche des mit zumindest einem Leitfähigkeitsadditiv gefüllten Elastomerwerkstoffes. Diese Kontaktierungspunkte können dann später mit geeigneten metallischen Kontaktelementen in Kontakt gebracht werden.

Schritt (c) des erfindungsgemäßen Verfahrens stellt das Behandeln der für eine Kontaktierung vorgesehenen Kontaktierungspunkte auf der Oberfläche des mit zumindest einem Leitfähigkeitsadditiv gefüllten Elastomerwerkstoffes mit einer Dispersion dar, wobei die Dispersion zumindest ein Leitfähigkeitsadditiv auf Kohlenstoffbasis in einer Menge von 30 bis 100 Gew.-%, bezogen auf den Feststoffgehalt der gesamten Dispersion, umfasst.

Erfindungsgemäß wird anstelle eines herkömmlichen Leitlacks zur Verbesserung der Kontaktierung des Elastomerwerkstoffs, wie beispielsweise eines Silberleitlacks, eine Dispersion auf Kohlenstoffbasis verwendet. Dadurch kann auf die Verwendung eines herkömmlichen, mit Nachteilen behafteten Leitlacks verzichtet werden. Gemäß einer bevorzugten Ausführungsform umfasst das erfindungsgemäße Verfahren somit keinen weiteren Schritt des Aufbringens eines Leitlacks, beispielsweise eines Silberleitlacks.

Die Behandlung der Kontaktierungspunkte auf der Oberfläche des Elastomerwerkstoffes kann in jedweder geeigneter Art und Weise erfolgen. Beispielsweise kann die Behandlung durch Aufstreichen, Auftropfen oder Aufsprühen der Dispersion auf die Oberfläche des Elastomerwerkstoffes erfolgen. Die aufzutragende Menge kann in Abhängigkeit von der verwendeten Auftragungsmethode in geeigneter Weise gewählt werden.

Bei der in Schritt (c) des erfindungsgemäßen Verfahrens zu verwendenden Dispersion handelt es sich um eine Dispersion eines Leitfähigkeitsadditivs auf Kohlenstoffbasis in einem geeigneten Lösungsmittel. Als dieses Leitfähigkeitsadditiv kann jedwedes geeignete, im Stand der Technik bekannte Leitfähigkeitsadditiv auf Kohlenstoffbasis verwendet werden. Vorzugsweise ist dieses aus der Gruppe, bestehend aus Rußen, Graphiten, Graphenen, Kohlenstoffnanoröhren, Kohlenstofffasern und Kombinationen davon, ausgewählt. Ganz besonders bevorzugt ist das Leitfähigkeitsadditiv Ruß, d.h. bei der Dispersion handelt es sich um eine Rußdispersion. Geeignete Ruße sind dem Fachmann bekannt und umfassen beispielsweise solche, die in der Elastomerindustrie als verstärkende Füllstoffe eingesetzt werden. Die Verwendung von Ruß hat den Vorteil, dass dieser grundsätzlich alterungsstabil und sehr gut mit Elastomerwerkstoffen verträglich ist. Darüber hinaus ist er in die Lage, in die Oberfläche des Elastomerwerkstoffes einzudiffundieren, wodurch die Kontaktierungsverbesserung bewirkt wird. Ohne an eine Theorie gebunden zu sein, wird davon ausgegangen, dass die Behandlung der Oberfläche des Elastomerwerkstoffes mit der Dispersion eines Leitfähigkeitsadditivs auf Kohlenstoffbasis dazu führt, dass an der Grenzfläche eine lokal hohe Konzentration an Leitfähigkeitsadditiv erzeugt wird, so dass dies nicht mehr vollständig von Polymer überdeckt werden kann. So bleiben die Kontaktierungspunkte für eine Kontaktierung durch geeignete metallische Kontaktelemente bestehen und der Kontaktierungswiderstand sinkt. Überraschenderweise kann diese Behandlung der Oberfläche auch vor einer Vulkanisation erfolgen und der Effekt bleibt weitestgehend nach der Vulkanisation erhalten.

Das Leitfähigkeitsadditiv auf Kohlenstoffbasis ist in einer Menge von 30 bis 100 Gew.-%, bezogen auf den Feststoffgehalt der gesamten Dispersion, in der Dispersion enthalten. Diese Menge ist notwendig, um eine ausreichende Kontaktierung der Kontaktierungspunkte zu gewährleisten. Vorzugsweise weist die Dispersion einen Feststoffgehalt an Leitfähigkeitsadditiv auf Kohlenstoffbasis von 60 bis 80 Gew.-%, bezogen auf den Feststoffgehalt der gesamten Dispersion, auf.

Gemäß einer bevorzugten Ausführungsform der vorliegenden Erfindung ist der mit zumindest einem Leitfähigkeitsadditiv gefüllte Elastomerwerkstoff ein Ruß-gefüllter Elastomerwerkstoff und die Dispersion ist eine Ruß-Dispersion.

Das für diese Dispersion zu verwendende Lösungsmittel kann der Fachmann in geeigneter Weise auswählen. Besonders vorteilhaft ist es dabei, das Lösungsmittel derart auszuwählen, dass dieses in der Lage ist, die Oberfläche des Elastomerwerkstoffes etwas zu quellen, da ein solches Quellen ein teilweises Eindringen der dispergierten Leitfähigkeitsadditivpartikel in die äußeren Schichten des Elastomerwerkstoffes erlaubt. Dies ist vorteilhaft hinsichtlich der Verbesserung der Kontaktierung des

Elastomerwerkstoffes. Besonders bevorzugt wird dabei ein Lösungsmittel bzw. Lösungsmittelgemisch ausgewählt, dessen Polarität auf die Polarität des Elastomerwerkstoffes abgestimmt ist.

Gemäß einer bevorzugten Ausführungsform des erfindungsgemäßen Verfahrens ist das Lösungsmittel ein organisches Lösungsmittel oder Lösungsmittelgemisch. Besonders bevorzugt umfasst die Dispersion mindestens ein Lösungsmittel, ausgewählt aus der Gruppe, bestehend aus Ethanol, Aceton, Wasser, Ethylacetat, 1-Ethoxy-2-propanol, Cyclohexan, Toluol und Kombinationen davon.

Gemäß einer weiteren bevorzugten Ausführungsform des erfindungsgemäßen Verfahrens umfasst die Dispersion zusätzlich einen Haftvermittler.

Herkömmlich werden Haftvermittler eingesetzt, um die Verbindung zwischen metallischem Kontaktelement sowie Elastomerwerkstoff zu verstärken, so dass diese auch unter Belastung noch aufrechterhalten werden kann. Der große Nachteil dieser Haftvermittler ist aber, dass diese im Wesentlichen nicht leitfähig sind und somit keine leitfähige Brücke zwischen metallischen Kontaktelement sowie Elastomerwerkstoff ausbilden. Die herkömmliche Verwendung dieser Haftvermittler führt somit zwar zu einer Verstärkung der Verbindung zwischen metallischem Kontaktelement sowie Elastomerwerkstoff, gleichzeitig jedoch zu einer Verschlechterung der elektrischen Kontaktierung. Gemäß dieser bevorzugten Ausführungsform des erfindungsgemäßen Verfahrens wird dieses Problem dadurch gelöst, dass die zur Behandlung der Kontaktierungspunkte auf der Oberfläche des Elastomerwerkstoffes zu verwendende Dispersion sowohl ein Leitfähigkeitsadditiv auf Kohlenstoffbasis als auch einen Haftvermittler umfasst.

Geeignete Haftvermittler, die erfindungsgemäß verwendet werden können, sind beispielsweise aus EP 0 321 166 A1 oder EP 0 476 902 A2 bekannt. Ein geeigneter Haftvermittler kann zum Beispiel eine Mischung aus einem Latex eines halogenierten, polymerisierten, konjugierten Diens, einer aromatischen Poly-C-nitrosoverbindung und einer Polymaleinimidverbindung oder eine Mischung aus einer Monohydroxy- oder Dihydroxyphenolkomponente, einer Trihydroxyphenolkomponente und einem aus Formaldehyd abgeleiteten Novolak- Phenolharz sein. Besonders bevorzugt ist der Haftvermittler eine Mischung aus Dichlorbutadienlatex, para-Dinitrosobenzol und Polymaleinimid oder eine Mischung aus Resorcinol, Pyrogallol, Formalin und Dowanol PM. Weiterhin kann beispielsweise para-Benzoquinondioxim (QDO) oder Bismaleimid als Haftvermittler verwendet werden.

Die in der bevorzugten Ausführungsform des erfindungsgemäßen Verfahrens verwendete Dispersion kann grundsätzlich auf zwei Arten bereitgestellt werden. Entweder wird dabei von kommerziell erhältlichen Haftvermittlern ausgegangen (beispielsweise Chemosil 211 und/oder Chemosil 411) und diese mit zusätzlichem Leitfähigkeitsadditiv auf Kohlenstoffbasis, vorzugsweise einem Ruß, ausgerüstet. Das Verfahren zur Herstellung dieser Dispersion umfasst das Bereitstellen einer Haftvermittler-Dispersion, das Verdünnen dieser Dispersion durch Zugabe von Lösungsmittel, das Aufmischen des Leitfähigkeitsadditivs auf Kohlenstoffbasis sowie das Einengen der Dispersion. Das Einengen (d.h. das teilweise Entfernen von Lösungsmittel) erfolgt vorzugsweise soweit, bis die gewünschte Viskosität erhalten wird. Alternativ kann die in dieser bevorzugten Ausführungsform des erfindungsgemäßen Verfahrens verwendete Dispersion erhalten werden, indem die Dispersion eines Leitfähigkeitsadditivs auf Kohlenstoffbasis, vorzugsweise die Rußdispersion, in Anlehnung an bekannte Haftvermittlerdispersionen compoundiert wird, die das Leitfähigkeitsadditiv auf Kohlenstoffbasis sowie den Haftvermittler enthalten. Auf diese Weise ist es möglich, die Haftwirkung mit einer elektrischen Kontaktierung zu verknüpfen.

Schritt (d) des erfindungsgemäßen Verfahrens stellt das Trocknen oder das Trocknenlassen des mit einer Dispersion behandelten Elastomerwerkstoffes dar. Auf diese Weise wird das Lösungsmittel der Dispersion entfernt, um so einen Elastomerwerkstoff zu erhalten, der an den Kontaktierungspunkten das Leitfähigkeitsadditiv auf Kohlenstoffbasis aufweist. Das Entfernen des Lösungsmittels kann erfolgen, indem der Elastomerwerkstoff einfach trocknen gelassen wird. Dies ist insbesondere dann vorteilhaft, wenn es sich bei dem Lösungsmittel um ein oder mehrere leicht flüchtige organische Lösungsmittel handelt. Alternativ kann man das Trocknen auch durch Erwärmen bewirken, beispielsweise bei einer Temperatur im Bereich von 30°C bis 80°C, vorzugsweise im Bereich von 40°C bis 70°C.

Der Schritt des Trocknens kann aber auch gemeinsam mit dem nächsten Schritt (e) des Vulkanisierens erfolgen, der vorstehend bereits beschrieben wurde. So ist bei Verwendung eines unvulkanisierten Elastomerwerkstoffes in Schritt (a) ein Schritt (e) der Vulkanisierung durchzuführen. Da im Rahmen der Vulkanisierung der Elastomerwerkstoff erwärmt wird, kann damit gleichzeitig auch das Lösungsmittel entfernt und somit das Trocknen bewirkt werden.

Der durch das erfindungsgemäße Verfahren behandelte Elastomerwerkstoff weist eine elektrische Leitfähigkeit auf und kann über die auf der Oberfläche vorgesehenen Kontaktierungspunkten elektrisch kontaktiert werden. Dieser Elastomerwerkstoff kann in jedweder geeigneten Anwendung eingesetzt werden. Dazu liegt der im erfindungsgemäßen Verfahren eingesetzte, mit zumindest einem Leitfähigkeitsadditiv gefüllte Elastomerwerkstoff vorzugsweise in Form eines Bauteils eines Schlauches, eines Reifens, einer Schuhsohle, eines Antriebsriemens, einer Luftfeder, eines Transportbandes, eines elastomerbeschichteten Gewebes, eines Schwingungsdämpferelements oder einer beheizbaren Elastomeranwendung vor.

Das erfindungsgemäße Verfahren hat den Vorteil, dass auf die Verwendung eines herkömmlichen Leitlacks, insbesondere eines Silberleitlacks, verzichtet werden kann. Das erfindungsgemäß aufgebrachte Leitfähigkeitsadditiv auf Kohlenstoffbasis ist im Gegensatz zum Silberleitlack nicht unmittelbar sichtbar, was die Anwendungsmöglichkeiten dieses Verfahrens vergrößert. So ist das Leitfähigkeitsadditiv auf Kohlenstoffbasis insbesondere auf schwarzen Elastomerwerkstoffen nicht sofort zu erkennen und kann so für nichtzerstörende Prüfungen verwendet werden, während der Silberleitlack einen weiteren Einsatz des Produktes nach dem Einsatz zumeist verhindert.

Außerdem ist das Leitfähigkeitsadditiv auf Kohlenstoffbasis weniger alterungsempfindlich als ein Silberleitlack, was im Hinblick auf die Haltbarkeit vorteilhaft ist. Weiterhin kann die Dispersion erfindungsgemäß vor oder nach der Vulkanisation aufgebracht werden, was eine größere Flexibilität bei der Verfahrensführung ermöglicht. So kann man beispielsweise Elastomerwerkstoffe an den Stellen, an denen beispielsweise Drähte als Kontaktelemente eingebracht werden sollen, zunächst mit der Dispersion behandeln und erst danach vulkanisieren. Alternativ kann man die Elastomerwerkstoffe erst nach der Vulkanisation mit der Dispersion behandeln, um so beispielsweise den Materialwiderstand ohne störende Kontaktwiderstände beurteilen zu können. Dies ist beispielsweise hilfreich im Rahmen des Produktfreigabeverfahrens von zum Beispiel Betankungsschläuchen oder Reifen. An Stellen, an denen nach Vulkanisation eine Kontaktierung wichtig ist, beispielsweise der Kontakt durch die metallischen Armaturen bei Betankungsschläuchen, kann zuvor die Dispersion angewendet werden.

Das erfindungsgemäß verwendete Leitfähigkeitsadditiv auf Kohlenstoffbasis ist auch weniger spröder als ein Silberleitlack und bricht bei Belastung nicht so leicht auf.

Wenn die erfindungsgemäß verwendete Dispersion zusätzlich einen Haftvermittler umfasst, kann weiterhin eine Verbesserung der Leitfähigkeit zusammen mit einer Verbesserung der Anbindung des metallischen Kontaktelements zur Kontaktierung erreicht werden. Dies ist für zahlreiche Anwendungen vorteilhaft. So kann man beispielsweise die in vielen Artikeln bereits vorhandenen metallischen Festigkeitsträger nutzen, um bestimmte Stellen im Produkt mit Strom (z.B. für Messungen in Sensorikkonzepten) zu versorgen, oder man kann metallische Festigkeitsträger gezielt auch als Kontaktelement zur Kontaktierung von Elastomerwerkstoffen nutzen und in Produkte miteinbringen.

Die vorliegende Erfindung betrifft ferner einen mit zumindest einem Leitfähigkeitsadditiv gefüllten Elastomerwerkstoff mit elektrischen Kontaktierungspunkten, der durch das erfindungsgemäße Verfahren erhältlich ist.

Die Erfindung soll nun unter Bezugnahme von Laborversuchen näher erläutert werden:
Ausführungsbeispiel 1 - Dispersion 1:
   20% Ruß (Typ N550); 32,5% 1-Ethoxy-2-propanol; 32,5% Ethanol; 7,5% Aceton; 7,5% Ethylacetat
   Leitfähigkeitsadditiv beträgt 100% des Feststoffgehaltes der Dispersion
Ausführungsbeispiel 2 - Dispersion 2:
   20% Ruß (Typ N550); 70% Cyclohexan; 10% Polyethylenglycol-tert.-octylphenylether (Triton X114)
   Leitfähigkeitsadditiv beträgt 100% des Feststoffgehaltes der Dispersion
Ausführungsbeispiel 3 - Dispersion 3:
   20% Ruß (Typ N550); 25% Haftvermittler (Typ Chemosil 211 (25% Feststoffgehalt)); 25% Haftvermittler (Typ Chemosil 411NL (25% Feststoffgehalt)); 30% Xylol
   Leitfähigkeitsadditiv beträgt 66,7% des Feststoffgehaltes der Dispersion
Elastomerwerkstoff auf NR-Basis:
   100 phr NR, 65 phr Ruß (Typ N550), 5 phr Weichmacher (paraffinisches Öl), 4 phr ZnO, 2 phr Stearinsäure, 3,5 phr Schwefel, 0,8 phr Beschleuniger (Vulkacit CZ/C) / vulkanisiert für 30 min bei 160°C

Tabelle 1 zeigt die Leitfähigkeitsergebnisse, gemessen als Durchgangswiderstand gemäß DIN EN 62631-3, ohne vorherige Behandlung durch Leitlackelektroden. Anhand der Ergebnisse ist der positive Effekt der Dispersionen deutlich zu erkennen. Zusätzlich erweist sich der Silberleitlack im Vergleich dazu als nicht ausreichend alterungsstabil.

**Tabelle 1**

| | DGW frisch am 6mm-Prüfkörper (24 h nach Vullkanisation) [Ohm] | DGW gelagert am 6mm-Prüfkörper (2 Monate nach Vulkanisation, Lagerung unter Raumtemperatur) [Ohm] |
|---|---|---|
| ohne Behandlung der Prüfkörper-Oberflächen | 200.000 | 200.000 |
| Behandlung der Prüfkörper-Oberflächen mit Silberleitlack nach der Vulkanisation | 1.700 | 4.400 |
| Behandlung der Prüfkörper-Oberflächen mit Dispersion 1 nach der Vulkanisation | 192 | 204 |
| Behandlung der Prüfkörper-Oberflächen mit Dispersion 2 nach der Vulkanisation | 168 | 184 |
| Behandlung der Prüfkörper-Oberflächen mit Dispersion 3 vor der Vulkanisation und Zusammenvulkanisieren mit Edelstahl-Folie (0.1 mm Dicke) | 214 | 250 |
| Behandlung der Prüfkörper-Oberflächen mit Disperion 3 vor der Vulkanisation und Zusammenvulkanisieren mit Messing-Folie (0.3 mm Dicke) | 26 | 16 |

## Patentansprüche

1. Verfahren zur Herstellung eines mit zumindest einem Leitfähigkeitsadditiv gefüllten Elastomerwerkstoffes mit elektrischen Kontaktierungspunkten, umfassend
(a) das Bereitstellen eines mit zumindest einem Leitfähigkeitsadditiv gefüllten Elastomerwerkstoffes,
(b) das Auswählen von für eine Kontaktierung vorgesehenen Kontaktierungspunkten auf der Oberfläche des mit zumindest einem Leitfähigkeitsadditiv gefüllten Elastomerwerkstoffes,
(c) das Behandeln der für eine Kontaktierung vorgesehenen Kontaktierungspunkte auf der Oberfläche des mit zumindest einem Leitfähigkeitsadditiv gefüllten Elastomerwerkstoffes mit einer Dispersion, welche zumindest ein Leitfähigkeitsadditiv auf Kohlenstoffbasis in einem Feststoffgehalt von 30 bis 100 Gew.-%, bezogen auf den Feststoffgehalt der gesamten Dispersion, umfasst,
(d) das Trocknen oder das Trocknenlassen des mit einer Dispersion behandelten Elastomerwerkstoffes, und
(e) das Vulkanisieren des mit einer Dispersion behandelten Elastomerwerkstoffes, wenn der in Schritt (a) eingesetzte Elastomerwerkstoff ein unvulkanisierter Elastomerwerkstoff ist.

2. Verfahren nach Anspruch 1, wobei der mit zumindest einem Leitfähigkeitsadditiv gefüllte Elastomerwerkstoff in Schritt (a) ein vulkanisierter Elastomerwerkstoff ist und kein zusätzlicher Schritt (e) des Vulkanisierens durchgeführt wird.

3. Verfahren nach Anspruch 1 oder 2, wobei das Verfahren keinen weiteren Schritt des Aufbringens eines Leitlacks, beispielsweise eines Silberleitlacks, umfasst.

4. Verfahren nach einem der Ansprüche 1 bis 3, wobei der Elastomerwerkstoff auf mindestens einem Elastomer basiert, welches aus der Gruppe, bestehend aus Acrylnitril-Butadien-Kautschuk (NBR), Carboxylgruppen-haltigem Nitril-Kautschuk (XNBR), Ethylen-Vinylacetat-Copolymer (EVAC), Ethylen-Vinylacetat-Kautschuk (EVM), hydriertem Acrylnitril-Butadien-Kautschuk (HNBR), Perfluorkautschuk (FFKM), Ethylen-Acrylat-Kautschuk (AEM), Polyacrylat-Kautschuk (ACM), Chlorpolyethylen-Kautschuk (CM), Chlorsulphonyl-Polyethylen-Kautschuk (CSM), Ethylen-Propylen-Dien-Kautschuk (EPDM), Ethylen-Propylen-Kautschuk (EPM), Fluor-Kautschuk (FKM), Epichlorhydrin-Kautschuk (CO), Epichlorhydrin-Copolymer-Kautschuk (ECO), Epichlorhydrin-Terpolymer (GECO), Polydimethylsiloxan (PDMS), Propylenoxid-Copolymer-Kautschuk (GPO), Butadien-Kautschuk (BR), Chloropren-Kautschuk (CR), Isobuten-Isopren-Kautschuk (IIR), Brombutyl-Kautschuk (BIIR), Chlorbutyl-Kautschuk (CIIR), Isopren-Kautschuk (IR), Natur-Kautschuk (NR), Styrol-Butadien-Kautschuk (SBR), Fluor-Silicon-Kautschuk (FVMQ), Methyl-Phenyl-Silicon-Kautschuk (PMQ), Methyl-Phenyl-Vinyl-Silicon-Kautschuk (PVMQ), Methyl-Silicon-Kautschuk (MQ), Methyl-Vinyl-Silicon-Kautschuk (VMQ), Polyester-Urethanen (AU), Polyether-Urethanen (EU) und Kombinationen davon, ausgewählt ist.

5. Verfahren nach einem der Ansprüche 1 bis 4, wobei das Leitfähigkeitsadditiv und das Leitfähigkeitsadditiv auf Kohlenstoffbasis der Dispersion unabhängig voneinander aus der Gruppe, bestehend aus Rußen, Graphiten, Graphenen, Kohlenstoffnanoröhren, Kohlenstofffasern und Kombinationen davon, ausgewählt sind.

6. Verfahren nach Anspruch 5, wobei der mit zumindest einem Leitfähigkeitsadditiv gefüllte Elastomerwerkstoff ein Ruß-gefüllter Elastomerwerkstoff ist und die Dispersion eine Ruß-Dispersion ist.

7. Verfahren nach einem der Ansprüche 1 bis 6, wobei die Dispersion mindestens ein Lösungsmittel, ausgewählt aus der Gruppe, bestehend aus Ethanol, Aceton, Wasser, Ethylacetat, 1-Ethoxy-2-propanol, Cyclohexan, Toluol und Kombinationen davon, umfasst.

8. Verfahren nach einem der Ansprüche 1 bis 7, wobei die Dispersion einen Feststoffgehalt an Leitfähigkeitsadditiv auf Kohlenstoffbasis von 60 bis 80 Gew.-%, bezogen auf den Feststoffgehalt der gesamten Dispersion, aufweist.

9. Verfahren nach einem der Ansprüche 1 bis 8, wobei die Dispersion zusätzlich einen Haftvermittler umfasst.

10. Verfahren nach einem der Ansprüche 1 bis 9, wobei der mit zumindest einem Leitfähigkeitsadditiv gefüllte Elastomerwerkstoff in Form eines Bauteils eines Schlauches, eines Reifens, einer Schuhsohle, eines Antriebsriemens, einer Luftfeder, eines Transportbandes, eines elastomerbeschichteten Gewebes, eines Schwingungsdämpferelements oder einer beheizbaren Elastomeranwendung vorliegt.

11. Mit zumindest einem Leitfähigkeitsadditiv gefüllter Elastomerwerkstoff mit elektrischen Kontaktierungspunkten, erhältlich durch das Verfahren nach einem der Ansprüche 1 bis 10.

## Claims

1. Process for producing an elastomer material filled with at least one conductivity additive and having electrical contacting points, comprising
(a) providing an elastomer material filled with at least one conductivity additive,
(b) selecting contacting points provided for contacting on the surface of the elastomer material filled with at least one conductivity additive,
(c) treating the contacting points provided for contacting on the surface of the elastomer material filled with at least one conductivity additive with a dispersion which comprises at least one carbon-based conductivity additive in a solids content of 30% to 100% by weight based on the solids content of the total dispersion,
(d) drying the elastomer material treated with a dispersion or allowing said material to dry and
(e) vulcanising the elastomer material treated with a dispersion if the elastomer material employed in step (a) is an unvulcanised elastomer material.

2. Process according to Claim 1, wherein the elastomer material filled with at least one conductivity additive in step (a) is a vulcanized elastomer material and no additional step (e) of vulcanizing is performed.

3. Process according to Claim 1 or 2, wherein the process comprises no further step of applying a conductivity varnish, for example a silver conductivity varnish.

4. Process according to any of Claims 1 to 3, wherein the elastomer material is based on at least one elastomer selected from the group consisting of acrylonitrile-butadiene rubber (NBR), carboxylated nitrile rubber (XNBR), ethylene-vinyl acetate copolymer (EVAC), ethylene-vinyl acetate rubber (EVM), hydrogenated acrylonitrile-butadiene rubber (HNBR), perfluororubber (FFKM), ethylene-acrylate rubber (AEM), polyacrylate rubber (ACM), chloropolyethylene rubber (CM), chlorosulfonyl polyethylene rubber (CSM), ethylene-propylene-diene rubber (EPDM), ethylene-propylene rubber (EPM), fluoro rubber (FKM), epichlorohydrin rubber (CO), epichlorohydrin copolymer rubber (ECO), epichlorohydrin terpolymer (GECO), polydimethylsiloxane (PDMS), propylene oxide copolymer rubber (GPO), butadiene rubber (BR), chloroprene rubber (CR), isobutene-isoprene rubber (IIR), bromobutyl rubber (BIIR), chlorobutyl rubber (CIIR), isoprene rubber (IR), natural rubber (NR), styrene-butadiene rubber (SBR), fluorosilicone rubber (FVMQ), methylphenylsilicone rubber (PMQ), methylphenylvinylsilicone rubber (PVMQ), methylsilicone rubber (MQ), methylvinylsilicone rubber (VMQ), polyester urethanes (AU), polyether urethanes (EU) and combinations thereof.

5. Process according to any of Claims 1 to 4, wherein the conductivity additive and the carbon-based conductivity additive of the dispersion are independently of one another selected from the group consisting of carbon blacks, graphites, graphenes, carbon nanotubes, carbon fibres and combinations thereof.

6. Process according to Claim 5, wherein the elastomer material filled with at least one conductivity additive is a carbon black-filled elastomer material and the dispersion is a carbon black dispersion.

7. Process according to any of Claims 1 to 6, wherein the dispersion comprises at least one solvent selected from the group consisting of ethanol, acetone, water, ethyl acetate, 1-ethoxy-2-propanol, cyclohexane, toluene and combinations thereof.

8. Process according to any of Claims 1 to 7, wherein the dispersion comprises a solids content of carbon-based conductivity additive of 60% to 80% by weight based on the solids content of the total dispersion.

9. Process according to any of Claims 1 to 8, wherein the dispersion further comprises an adhesion promoter.

10. Process according to any of Claims 1 to 9, wherein the elastomer material filled with at least one conductivity additive is in the form of a component of a hose, a tyre, a shoe sole, a drive belt, an air spring, a conveyor belt, an elastomer-coated fabric, a vibration damper element or a heatable elastomer application.

11. Elastomer material filled with at least one conductivity additive and having electrical contacting points obtainable by the process according to any of Claims 1 to 10.

## Revendications

1. Procédé de fabrication d'un matériau élastomère chargé d'au moins un additif conductible présentant des points de contact électriques, comprenant
(a) la mise à disposition d'un matériau élastomère chargé d'au moins un additif conductible,
(b) la sélection de points de contact prévus pour une mise en contact sur la surface du matériau élastomère chargé d'au moins un additif conductible,
(c) le traitement des points de contact prévus pour une mise en contact sur la surface du matériau élastomère chargé d'au moins un additif conductible par une dispersion qui comprend au moins un additif conductible à base de carbone à une teneur en solides de 30 à 100% en poids, par rapport à la teneur en solides de la totalité de la dispersion,
(d) le séchage ou le fait de laisser sécher le matériau élastomère traité par une dispersion et
(e) la vulcanisation du matériau élastomère traité par une dispersion, lorsque le matériau élastomère utilisé dans l'étape (a) est un matériau élastomère non vulcanisé.

2. Procédé selon la revendication 1, le matériau élastomère chargé d'au moins un additif conductible dans l'étape (a) étant un matériau élastomère vulcanisé et une étape (e) supplémentaire de vulcanisation n'étant pas réalisée.

3. Procédé selon la revendication 1 ou 2, le procédé ne comprenant pas d'autre étape d'application d'un vernis conducteur, par exemple d'un vernis conducteur à base d'argent.

4. Procédé selon l'une des revendications 1 à 3, le matériau élastomère étant à base d'au moins un élastomère qui est choisi dans le groupe constitué par le caoutchouc d'acrylonitrile-butadiène (NBR), le caoutchouc de nitrile contenant des groupes carboxyle (XNBR), un copolymère d'éthylène-acétate de vinyle (EVAC), le caoutchouc d'éthylène-acétate de vinyle (EVM), le caoutchouc d'acrylonitrile-butadiène hydrogéné (HNBR), le caoutchouc perfluoré (FFKM), le caoutchouc d'éthylène-acrylate (AEM), le caoutchouc de polyacrylate (ACM), le caoutchouc de chloropolyéthylène (CM), le caoutchouc de chlorosulfonyl-polyéthylène (CSM), le caoutchouc d'éthylène-propylène-diène (EPDM), le caoutchouc d'éthylène-propylène (EPM), le caoutchouc fluoré (FKM), le caoutchouc d'épichlorhydrine (CO), le caoutchouc de copolymère d'épichlorhydrine (ECO), un terpolymère d'épichlorhydrine (GECO), le polydiméthylsiloxane (PDMS), le caoutchouc de copolymère d'oxyde de propylène (GPO), le caoutchouc de butadiène (BR), le caoutchouc de chloroprène (CR), le caoutchouc d'isobutène-isoprène (IIR), le caoutchouc de bromobutyle (BIIR), le caoutchouc de chlorobutyle (CIIR), le caoutchouc d'isoprène (IR), le caoutchouc naturel (NR), le caoutchouc de styrène-butadiène (SBR), le caoutchouc de fluorosilicone (FVMQ), le caoutchouc de méthyl-phényl-silicone (PMQ), le caoutchouc de méthyl-phényl-vinyl-silicone (PVMQ), le caoutchouc de méthyl-silicone (MQ), le caoutchouc de méthyl-vinyl-silicone (VMQ), les polyester-uréthanes (AU), les polyéther-uréthanes (EU) et leurs combinaisons.

5. Procédé selon l'une des revendications 1 à 4, l'additif conductible et l'additif conductible à base de carbone de la dispersion étant choisis, indépendamment l'un de l'autre, dans le groupe constitué par les suies, les graphites, les graphènes, les nanotubes de carbone, les fibres de carbone et leurs combinaisons.

6. Procédé selon la revendication 5, le matériau élastomère chargé d'au moins un additif conductible étant un matériau élastomère chargé de suie et la dispersion étant une dispersion de suie.

7. Procédé selon l'une des revendications 1 à 6, la dispersion comprenant au moins un solvant, choisi dans le groupe constitué par l'éthanol, l'acétone, l'eau, l'acétate d'éthyle , le 1-éthoxy-2-propanol, le cyclohexane, le toluène et leurs combinaisons.

8. Procédé selon l'une des revendications 1 à 7, la dispersion présentant une teneur en solides d'additif conductible à base de carbone de 60 à 80% en poids, par rapport à la teneur en solides de la totalité de la dispersion.

9. Procédé selon l'une des revendications 1 à 8, la dispersion comprenant en outre un promoteur d'adhérence.

10. Procédé selon l'une des revendications 1 à 9, le matériau élastomère chargé d'au moins un additif conductible se trouvant sous forme d'un composant d'un tuyau flexible, d'un pneu, d'une semelle de chaussure, d'une courroie d'entraînement, d'un ressort pneumatique, d'une bande transporteuse, d'un tissu revêtu d'élastomère, un élément d'amortisseur de vibrations ou d'une application élastomère pouvant être chauffée.

11. Matériau élastomère chargé d'au moins un additif conductible présentant des points de contact électriques, pouvant être obtenu selon le procédé selon l'une des revendications 1 à 10.
